# EUROPEAN PATENT SPECIFICATION

(11) **EP 2 370 703 B1**
(45) Date of publication and mention of the grant of the patent: **28.08.2013**
(21) Application number: 09799520.3
(22) Date of filing: 07.12.2009
(51) Int. Cl.: F16C 33/20, C08L 79/08, C08K 3/08, C08L 27/18

(54) **BEARINGS**
LAGER
PALIERS

(30) Priority: 08.12.2008 GB 0822346
(43) Date of publication of application: 05.10.2011
(60) Divisional application: 13003442.4
(73) Proprietor: MAHLE International GmbH, 70376 Stuttgart (DE); Mahle Engine Systems Uk Limited, Northampton NN5 5TZ (GB)
(72) Inventor: MAYSTON, Carolyn, Leicester LE4 1EN (GB); FORDER, Jonathan, Warwickshire (GB)
(74) Representative: Pohle, Reinhard
(86) International application number: PCT/EP2009/008719
(87) International publication number: WO 2010/066396

(56) References cited:
- WO-A1-2004/113749
- GB-A- 2 345 095
- GB-A- 2 384 033

## Description

The present invention relates to plain bearings and particularly, though not exclusively, to plain bearings having a strong backing layer, a layer of a first bearing material on the backing layer and a layer of a second bearing material on the layer of first bearing material.

Plain bearings for use as crankshaft journal bearings in internal combustion engines, for example, are usually semi-cylindrical in form and generally have a layered construction. The layered construction frequently comprises a strong backing material such as steel, for example, of a thickness in the region of about 1 mm or more; a lining of a first bearing material adhered to the backing and of a thickness generally in the range from about 0.1 to 0.5mm; and often a layer of a second bearing material adhered to the surface of the first bearing material and having a thickness of less than about 25µm. The surface of the second bearing material forms the actual running or sliding surface with a co-operating shaft journal surface. The backing provides strength and resistance to deformation of the bearing shell when it is installed in a main bearing housing or in a connecting rod big end for example. The first bearing material layer provides suitable bearing running properties if the layer of the second bearing material should be worn through for any reason. Thus, the layer of first bearing material provides seizure resistance and compatibility with the shaft journal surface and prevents the journal surface from coming into contact with the strong backing material. As noted above, whilst the first bearing material provides seizure resistance and compatibility, it is generally harder than the material of the second layer. Thus, it is inferior in terms of its ability to accommodate small misalignments between bearing surface and shaft journal (conformability) and in the ability to embed dirt particles circulating in the lubricating oil supply so as to prevent scoring or damage to the journal surface by the debris (dirt embedability).

The first bearing material may commonly be chosen from either an aluminium-based alloy or a copper-based alloy material. Aluminium-based alloys generally comprise an aluminium alloy matrix having a second phase of a soft metal therein. Generally, the soft metal phase may be chosen from one or more of lead, tin and bismuth, however, lead is nowadays a non-preferred element due to its environmental disadvantages. Copper-based alloys such as copper-lead and leaded bronzes are also likely to fall into disfavour eventually due to these environmental considerations and may be replaced by lead-free copper alloys, for example.

The second bearing material layer which co-operates with the shaft journal is also known as an overlay layer and has generally been formed by a relatively very soft metal layer. An example is lead-tin alloy deposited, for example, by electrochemical deposition. Such alloys, however, in addition to being undesirable environmentally are also prone to wear in modem highly loaded engine applications. In order to replace such overlay alloys with lead-free, more wear resistant alternatives much work has been carried out on soft aluminium alloys having relatively high tin contents and which are deposited by techniques such as cathodic sputtering, for example. A disadvantage of such techniques is that such bearing layers are expensive to produce, the process being an essentially small batch process due to the vacuum sputtering equipment required.

More recently work has been carried out on bearing overlay layers composed of a matrix of plastics polymer material.

Some workers have provided plastics polymer bearing layers on top of a conventional metallic bearing alloy lining as a so-called "bedding-in" layer intended to wear away over time and leave the conventional metallic bearing lining as the long term running or sliding surface. Such polymer bedding-in layers have relatively high contents of filler materials generally comprising self-lubricating materials such as graphite, molybdenum disulphide and the like. High filler contents of inherently weak materials are also detrimental to strength and wear resistance of the bearing layer which wears away relatively rapidly to fulfil the function of a bedding-in layer. Since the layer is intended to wear away relatively rapidly it is generally quite thin at about 5µm or less.

WO 2004/113749 of common ownership herewith describes a plastics polymer based bearing layer having a preferred conventional overlay layer thickness of 10 to 30µm when deposited upon a bearing having a layer of metallic bearing material and which overlay is intended to last the life of the bearing. Moreover, the material described in this document is also able to constitute a sole bearing layer when deposited directly upon a strong backing layer at a preferred thickness range of 40 - 70µm. The plastics polymer based overlay material comprises: a matrix of a polyimide/amide or modified epoxy resin and fillers selected from: 15 - 30 vol% metal powder; 1 - 15 vol% fluoropolymer; 0.5 - 20 vol% ceramic powder; and 2 - 15 vol% silica. Plastics polymer overlay layers based on such formulations exhibited high wear resistance and fatigue strength, however, the relatively high levels of filler content tended to make the overlay layer relatively hard and consequently less able to absorb and nullify the deleterious effects of debris particles circulating in the lubricating oil thus, the dirt embedability may be less than desired which can lead to scoring of the bearing surface and/or the shaft journal surface.

It is an object of the present invention to provide a plastics polymer-based overlay material which mitigates some of the disadvantages of known polymer-based bearing materials.

According to a first aspect of the present invention there is provided a plastics polymer-based bearing material, consisting of a matrix of a polyimide/amide plastics polymer material and having distributed throughout the matrix: 12.5 vol% aluminium powder, from 2 to 8 vol% of a fluoropolymer, from 3 to 6 vol% of a silane, the balance being the polyimide/amide resin apart from incidental impurities.

In WO 2004/113749 the polyimide/amide resin matrix also contained additions of vinyl resin to improve the conformability of the resulting bearing layer. We have now found that such vinyl additions are not now required since the conformability of the plastics polymer bearing material is sufficient in view of the much reduced levels of filler materials compared with the earlier materials. Furthermore, the vinyl additions of the earlier material tended to weaken the polyimide/amide matrix in terms of strength. Consequently, an important advantage of the new plastics polymer-based bearing material is that it now comprise a significantly higher proportion of an inherently stronger material than does our earlier polymer bearing material.

We have now discovered that the polyimide/amide resin matrix is a very high strength material in its own right and able to withstand the chemical attack and mechanical and thermal stresses imposed upon it in a bearing in an engine operating environment, the purpose of the additions to the matrix being to improve the surface sliding properties of the polyimide/amide matrix material.

The metal powder is chosen from: aluminium, . Surprisingly, however, we have found that whereas our earlier material showed metal powder mixtures of aluminium and tungsten together as giving the best performance, we have now found that pure aluminium powder on its own gives the best results.

Aluminium powder having particles in the form of flake platelets of 1 to 5µm in size, preferably 2 to 3µm in size, provides the most suitable form of metal powder addition. The flake nature of the powder generally results in the maximum area of metal powder being exposed to a co-operating shaft journal by virtue of the plane of the flakes being orientated generally parallel to the bearing surface. This orientation results from the production method of depositing the bearing material as described in more detail below.

A further advantage of the platelet flake morphology of the aluminium powder is that the particles are more securely bonded to the matrix by virtue of the relatively large surface area of each individual particle and thus prevents aluminium particles from being plucked from the matrix during engine operation.

Without wishing to be bound by any particular theory, it is believed that the superior wear resistance of the bearing material according to the present invention may be due to the alumina film formed on the surface of the aluminium flakes. It is believed that the alumina provides a very fine abrasive which tends to polish the machining asperities on the co-operating shaft journal surface rendering the shaft journal surface itself less abrasive to the polymer-based bearing material and thus reducing the wear rate thereof.

The fluoropolymer content is in the range from 2 to 8 vol%.

The fluoropolymer addition may preferably be constituted by polytetrafluoroethylene (PTFE) as this is the most effective of the fluoropolymers in terms of reducing the friction coefficient of the bearing material and improved self-lubricating properties. However, other fluoropolymers, such as fluorinated ethylene-propylene (FEP), for example, well known in the bearings art, may be used if desired.

A method of manufacturing a plastics polymer based bearing material way comprise the steps of: making a mixture of a polyimide/amide plastics resin material in a solvent with a metal powder addition of from 5 to less than 15 vol% of a metal powder and from 1 to 15 vol% of a fluoropolymer, the balance comprising the polyimide/amide resin; coating the mixture onto a substrate; treating so as to remove the solvent; and, treating so as to consolidate the polyimide/amide matrix.

Note that in the above composition the polyimide/amide resin, metal powder and fluoropolymer contents are those remaining in the final material after the solvent has been removed.

Desirably the solvent mixture is of a suitable viscosity that the coating technique of applying the solvent mixture to the substrate results in the final thickness of the plastics polymer bearing material being at a desired thickness without the need to machine to a desired final wall, thickness. However, machining of the plastic polymer material may be undertaken if required.

Where a metallic bearing material layer is present directly beneath the plastics polymer layer, a final thickness of between 4 to 40µm of the polymer layer may be suitable. A preferred thickness may be from 4 to 15µm. A yet more preferred thickness may be from 4 to 10µm.

The substrate may comprise a composite material comprising a strong backing material such as steel or bronze, for example, the strong backing material also having bonded thereto a layer of a metallic bearing material such as an aluminium-based or copper-based bearing alloy, for example. Furthermore the substrate may be in any desired form such as a substantially finished semi-cylindrical half bearing or flat strip from which bearings may then be formed after the coating step, for example.

Alternatively, the substrate may comprise only a strong backing material layer onto which the plastics polymer bearing material is deposited. In this case where only a strong backing layer is used without an intervening metallic bearing material layer, the layer of plastics polymer bearing material according to the present invention may be deposited in a thicker layer than in the case where it is deposited upon a metallic bearing material layer.

In the case where the plastics polymer layer is deposited directly upon a strong backing layer a thickness of from 40 to 100µm may be provided with a preferred thickness in the range from 40 to 70µm. However where the strong backing layer is a bronze material which may be suitable bearing material in itself the plastics polymer layer may be thinner than these values.

The plastics polymer mixture also contains an addition of 3 to 6 vol% a silane material. Silane materials have been found to promote stability of the polyimide/amide matrix and have also been found to promote adhesion of the polyimide/amide resin material to the substrate. A suitable silane material may be gammaaminopropyltriethoxysilane and an addition in the range of 3 to 6 vol% is made to the mixture.

A suitable alternative silane material may comprise bis-(gamma-trimethoxysilpropyl)amine.

A suitable solvent may comprise n-methyl-2-pyrrolidone xylene and can be employed in various proportions in order to achieve a particular desired viscosity of mixture for coating onto the substrate.

A suitable method depositing the plastics polymer bearing material onto a substrate may be that of spraying. Control of layer thickness may also be exercised by spraying a plurality of separate layers onto the substrate.

In order that the present invention may be more fully understood examples will now be described by way of illustration only with reference to the following drawings, of which:

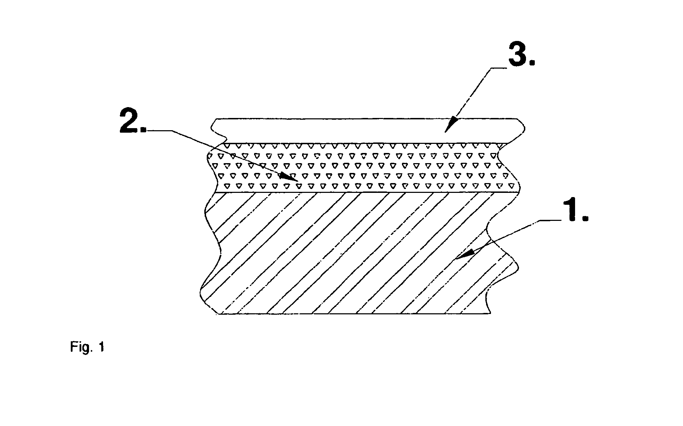

Figure 1 shows a schematic cross section through the thickness of part of a sliding bearing having the plastics polymer-based overlay material according to the present invention as a running sliding surface

Figure 1 shows a cross section through part of a sliding bearing comprising a strong backing 1 such as steel, a bearing lining layer 2 comprising a copper-based alloy or an aluminium-based alloy and a plastics polymer-based overlay layer 3 according to the present invention.

Two examples of bearings according to the present invention were made, these having plastic polymer-based overlay coatings as follows:

### Example 1.

### Polymer coating on a bronze substrate

| | | |
|---|---|---|
| 1. | Backing | Low Carbon steel |
| | | Thickness 1-5mm |
| 2. | Lining | Cu Remainder |
| | | Sn 8% |
| | | Ni 1% |
| | | Thickness 300µm |
| 3. | Overlay Coating | Al 12.5% |
| | | PTFE 5.7% |
| | | Silane 4.8% |
| | | Others Total < 0.1% |
| | | Polyimide/amide 77% |
| | | Thickness 12µm |

### Example 2.

### Polymer coating on an Aluminium substrate

| | | |
|---|---|---|
| 1. | Backing | Low Carbon steel |
| | | Thickness 1-5mm |
| 2. | Lining | Al Remainder |
| | | Sn 6.5% |
| | | Cu 1% |
| | | Ni 1% |
| | | Si 2.5% |
| | | With Mn and V additions |
| | | Thickness 300µm |
| 3. | Overlay Coating | Al 12.5% |
| | | PTFE 5.7% |
| | | Silane 4.8% |
| | | Others Total < 0.1% |
| | | Polyimide/amide 77% |
| | | Thickness 9µm |

The test bearings were produced to a standard production route of blanks of the steet/lining material cut from bi-metal coil and formed into semi-circular blanks by a press tool. The semi-circular blanks are then machined along all edges to give even machined surfaces with or without chamfers. The parts are then bored to the desired wall thickness by the standard method. To prepare the bored surface for coating the parts are degreased and then grit blasted with a fine Al₂O₃ grit (360) using a standard grit blasting process. Any residual grit is removed by an air blast. The parts are then masked for spraying. The spraying is then carried out using a standard manual air powered spray gun. The coating is built up in multiple layers with a flash off phase carried out between each layer to remove solvent. After the final coating thickness has been achieved the coating is given a final cure at 190°C for 30 minutes. Once cooled the parts require no further processing before they are tested.

Throughout the description and claims of this specification, the words "comprise" and "contain" and variations of the words, for example "comprising" and "comprises", means "including but not limited to", and is not intended to (and does not) exclude other moieties, additives, components, integers or steps.

Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith.

## Claims

1. A plastics polymer-based bearing material, consisting of a matrix of a polyimide/amide plastics polymer material and having distributed throughout the matrix: 12.5 vol% aluminium powder, from 2 to 8 vol% of a fluoropolymer, from 3 to 6 vol% of a silane, the balance being the polyimide/amide resin apart from incidental impurities.

2. A plastics polymer-based bearing material according to claim 1, wherein the aluminium powder has particles in the form of flake platelets of 1 to 5 µm in size.

3. A plastics polymer-based bearing material according to claim 2, wherein the particle size is 2 to 3 µm.

4. A plastics polymer-based bearing material according to any one preceding claim, wherein the fluoropolymer is selected from the group comprising: PTFE and FEP.

5. A plastics polymer-based bearing material according to claim 1, wherein the silane material is selected from the group comprising: gammaaminopropyltriethoxysilane and bis-(gamma-trimethoxysilylpropyl)amine.

## Patentansprüche

1. Auf Polymer basierendes Material für ein Lager aus Kunststoff, bestehend aus einer Matrix aus einem Kunststoff aus polymerischem Polyimid-/-amidmaterial, das über die gesamte Matrix verteilt aufweist: 12,5 Vol.-% Aluminiumpulver, 2 bis 8 Vol.-% Fluorpolymer, 3 bis 6 Vol.-% Silan und zu übrigen Teilen das Polyimid/-amidharz ohne zufällige Verunreinigungen.

2. Auf Polymer basierendes Material für ein Lager aus Kunststoff nach Anspruch 1, wobei das Aluminiumpulver Teilchen in Form von dünnen Schuppen mit einer Größe von 1 bis 5 µm aufweist.

3. Auf Polymer basierendes Material für ein Lager aus Kunststoff nach Anspruch 2, wobei die Teilchengröße 2 bis 3 µm ist.

4. Auf Polymer basierendes Material für ein Lager aus Kunststoff nach einem der vorangehenden Ansprüche, wobei das Fluorpolymer ausgewählt ist aus der Gruppe, die umfasst: PTFE und FEP.

5. Auf Polymer basierendes Material für ein Lager aus Kunststoff nach Anspruch 1, wobei das Silanmaterial ausgewählt ist aus der Gruppe bestehend aus: gamma-Aminopropyltriethoxysilan und Bis-(gamma-Trimethoxysilylpropyl)amin.

## Revendications

1. Matière plastique pour palier à base de polymère, consistant en une matrice constituée d'une matière polymère plastique polyamide/amide, avec la répartition suivante à travers la matrice : 12,5% en volume de poudre d'aluminium, de 2 à 8% en volume de fluoropolymère, de 3 à 6% en volume de silane, le reste étant une résine de polyamide/amide, mis à part les impuretés accidentelles.

2. Matière plastique pour palier à base de polymère selon la revendication 1, dans laquelle la poudre d'aluminium comporte des particules sous forme de pailettes de flocons d'une taille de 1 à 5 µm.

3. Matière plastique pour palier à base de polymère selon la revendication 2, dans laquelle la taille des particules est de 2 à 3 µm.

4. Matière plastique pour palier à base de polymère selon l'une quelconque des revendications précédentes, dans laquelle le fluoropolymère est sélectionné parmi le groupe comprenant : le PTFE et le FEP.

5. Matière plastique pour palier à base de polymère selon la revendication 1, dans laquelle le silane est sélectionné parmi le groupe comprenant : le gamme-aminopropyltriéthoxysilane et le bis-(gamma-trimethoxysilylpropyl)amine.
